# FASCICULE DE BREVET EUROPEEN

(11) **EP 3 817 874 B1**
(45) Date de publication et mention de la délivrance du brevet: **03.06.2026**
(21) Numéro de dépôt: 19756216.8
(22) Date de dépôt: 03.07.2019
(51) Int. Cl.: B22C 9/06, B22D 17/22, B29C 45/73, B22D 17/32, B29C 33/02, B22D 2/00

(54) **PROCEDE POUR LE CONTROLE DE LA TEMPERATURE LOCALE D'UNE PIECE LORS DE SA FABRICATION PAR MOULAGE**
VERFAHREN ZUR STEUERUNG DER LOKALEN TEMPERATUR EINES TEILS WÄHREND DER HERSTELLUNG DAVON IN EINEM FORMPROZESS
METHOD FOR CONTROLLING THE LOCAL TEMPERATURE OF A PART DURING THE MANUFACTURING THEREOF IN A MOLDING PROCESS

(30) Priorité: 03.07.2018 FR 1856112
(43) Date de publication de la demande: 12.05.2021
(73) Titulaire: Lethiguel, 69210 Lentilly (FR)
(72) Inventeur: LEVACHER, Guillaume, 69570 DARDILLY (FR); GOULEVITCH, Christophe, 69380 ALIX (FR)
(74) Mandataire: IXAS Conseil
(86) Numéro de dépôt international: PCT/FR2019/051641
(87) Numéro de publication internationale: WO 2020/008141

(56) Documents cités:
- EP-A1- 3 315 226
- JP-A- H 091 313
- JP-A- S61 176 460
- DATABASE WPI Week 198742, Derwent World Patents Index; AN 1987-294360, XP002794942

## Description

### Domaine technique de l'invention

L'invention concerne le domaine du moulage, et plus précisément du moulage de matière à l'état de fusion dans un moule permanent. Cette matière à l'état de fusion peut être un métal ou un matériau polymère. Plus précisément, l'invention concerne le domaine du contrôle de la température locale de la matière introduite à l'état de fusion, lors de son introduction et son refroidissement dans un moule métallique. L'invention porte sur un nouveau procédé permettant le contrôle de la température locale de la matière introduite dans le moule.

Elle s'applique notamment au moulage par injection, à haute pression ou à basse pression, et au moulage par gravité.

### Etat de la technique

Le moulage est une technique métallurgique de mise en forme très ancienne. Aujourd'hui le procédé de moulage par injection dans un moule permanent est largement utilisé pour fabriquer des pièces de forme complexe en grande série. On produit ainsi par moulage en moules métalliques des pièces en divers alliages légers destinées au secteur de l'automobile, tel que des culasses et des carters ; on produit également des pièces de forme complexes pour l'industrie aéronautique et pour le génie mécanique, telles que des pièces de structure, des échangeurs de chaleur, des pièces de raccord mécanique ou fluidique. En dehors des alliages dits légers (aluminium, aluminium-silicium, magnésium) les alliages mis en forme par moulage par injection sont notamment des alliages de cuivre et des alliages de zinc. Dans le domaine des métaux ferreux on connaît notamment le moulage de la fonte.

Les moules permanents présentent en règle générale au moins deux parties, appelées coquilles, qui, en se fermant l'une sur l'autre, définissent la forme externe de la pièce moulée ; elles peuvent comprendre des noyaux pour former des orifices ou des dépressions dans la pièce. L'épaisseur de paroi des pièces moulées complexes peut varier de manière significative d'un endroit à l'autre. Puisque la chaleur latente de solidification est extraite par le moule, cela implique une variation de la vitesse de refroidissement. La vitesse de refroidissement influe sur la structure métallurgique au sein de la pièce moulée, à la fois sur la macroségrégation, sur la microségrégation et sur la précipitation. Il s'ensuit que les caractéristiques mécaniques du matériau de la pièce moulée peuvent varier d'un endroit à l'autre, en fonction de la vitesse de refroidissement locale. Cela peut limiter la performance des pièces moulées, dans la mesure où le concepteur ne peut pas tirer pleinement profit des possibilités de l'alliage avec lequel il conçoit la pièce moulée. Cela complique également la modélisation des pièces moulées lors de leur conception. Et enfin, cela augmente le risque d'apparition de défauts dans des zones critiques de la pièce : ces défauts peuvent notamment être des retassures ou des porosités.

Pour pallier ce problème l'homme de métier utilise depuis des décennies des techniques de refroidissement local (appelé aussi « refroidissement dirigé ») du moule. Ces techniques utilisent des inserts refroidis, et en particulier des noyaux refroidis ; pour les alliages d'aluminium cela est décrit déjà dans Aluminium-Taschenbuch, 14^{ème} édition, Düsseldorf 1983, p. 419, qui est un ouvrage de référence pour l'homme du métier. Une de ces techniques est connue sous le nom de « jet cooling ». Selon cette technique, un noyau de moule est formé par un corps tubulaire borgne (que l'homme du métier appelle en anglais « core pin », ou, en français, « broche », et qui sera appelé ici « doigt de refroidissement ») qui est refroidi de l'intérieur. Ce refroidissement peut être continu ou non. La demanderesse commercialise des dispositifs de refroidissement par jet dans lesquelles on injecte d'abord à travers une première entrée une quantité d'eau dans le corps tubulaire ; cette eau s'évapore au moins en partie (et c'est alors surtout l'enthalpie d'évaporation qui provoque le refroidissement), et la vapeur d'eau est chassée ensuite par un jet d'air injecté à travers une deuxième entrée. Ce cycle peut être répété plusieurs fois pour chaque cycle de moulage. Le doigt de refroidissement est en alliage métallique qui résiste au contact avec le matériau fondu ; sa durée de vie est cependant limitée. Compte tenu du risque de percement par l'usure, on vérifie après chaque cycle l'étanchéité du système ; c'est l'une des fonctions du jet d'air. L'autre fonction du jet d'air est de chasser toute trace d'eau du corps tubulaire en fin du cycle de moulage, avant l'arrivée du métal liquide dans le moule, compte tenu du risque d'explosion en cas de contact direct entre l'eau et le métal liquide. Plusieurs doigts de refroidissement peuvent être déployés au sein d'une même coquille. Cela augmente le nombre de degrés de liberté du concepteur de pièces mais peut entraîner un certain encombrement des abords de la coquille par des conduits d'eau et d'air.

Le document US 2014/0008031 (Magna BDW Technologies) montre un doigt de refroidissement typique, qui présente une partie proximale, présentant des embouts pour le milieu de refroidissement, et une partie distale destinée à entrer en contact avec la zone à refroidir. Cependant, la présence de joints soudés dans la partie distale risque de poser un problème de fiabilité en contact avec un métal liquide.

Le jet cooling est devenu une technique de référence, qui a permis d'améliorer la qualité du procédé de moulage par injection, de diminuer le taux de rebut, de prolonger la durée de vie des pièces moulées et des noyaux, tout en diminuant le temps du cycle de moulage.

Cependant il est assez difficile de calibrer le procédé de refroidissement en fonction du résultat souhaité, et en fonction des paramètres locaux et globaux du procédé.

Sur le plan thermique le cycle de moulage à injection ne conduit pas à un état stationnaire : il comprend une phase d'injection de matière à l'état de fusion, suivi d'une phase de solidification de la matière injectée, au cours de laquelle se produit un important transfert de chaleur de ladite matière vers la coquille, puis enfin une phase d'ouverture du moule pour décharger la pièce et éventuellement nettoyer la surface du moule ; après le nettoyage un traitement de surface peut être appliqué par aspersion avec un agent de séparation (poteyage). Il convient de souligner que la solidification de la matière fondue est une transition de phase accompagnée d'un flux enthalpique significatif. En tenant compte de tous ces paramètres, on constate que la thermique du moule peut être modifiée par une évolution ou une modification des paramètres globaux, telle que le temps de cycle de la coquille, la température du métal liquide, la température externe dans l'atelier, la température de l'eau injectée dans le doigt. Par ailleurs, la calibration du procédé de jet cooling peut être différente pour chaque forme de pièce et pour chaque endroit de la pièce, et elle dépend fortement de l'alliage utilisé. Il existe des modèles numériques pour simuler la distribution de température au sein de la pièce moulée ; ces modèles peuvent aider le concepteur du procédé lorsqu'il détermine la séquence de refroidissement par jet cooling.

La demanderesse s'est aperçu qu'il serait souhaitable de disposer d'un procédé optimisé de refroidissement par jet cooling qui tient mieux compte de la réalité thermique dans la coquille et dans la matière en fusion injectée dans le moule lors de son refroidissement. Malheureusement cette réalité n'est pas accessible en temps réel. On peut mesurer facilement la température de la surface externe de la coquille, ou on peut intégrer des sondes de température dans la coquille comme cela est décrit dans les documents DE 102 015 105 097 (J. Pfleghar), JP 2004-25260 (Honda), EP 1 950 020 (Mitsubishi), US 2003/015308 (Howmet Research), WO 2000/23244 (Gellert) et JP S62 204915 (Daiwa Kogyo Co).

EP 3 315 226 A1 (Nissan Motor Co) décrit un noyau de moulage refroidi utilisé pour les cylindres dans un moule à culasse ; ce noyau est réalisé en deux parties qui s'emboîtent, la partie extérieure présentant un trou borgne pouvant accueillir une sonde de température. La conception en deux parties permet de creuser sur la surface extérieure de la partie intérieure un canal en spirale ; cette forme en spirale est nécessaire pour assure une homogénéité thermique satisfaisante, mais assez difficile à fabriquer. Cependant, dans un noyau si large la mesure de température sur un point dans la partie extérieure risque de ne pas être représentative. Par ailleurs, l'assemblage du noyau en plusieurs parties nécessite de la main d'oeuvre dans l'atelier de moulage, et il y a un risque résiduel de fuites de liquide, avec des conséquences potentiellement graves.

WO 2007/026987 (Kang) décrit un moule à injection pourvu de résistances chauffantes et d'une sonde de température proche de la surface en contact avec la matière à l'état de fusion. US 2004/0213321 (ICIPC) décrit un moule d'injection de matière plastique comprenant deux plaques définissant une cavité pour recevoir la matière en fusion, ladite plaque pouvant comprendre un canal pour permettre la circulation d'un milieu de refroidissement ; une plaque métallique comprenant une sonde de température est inséré entre les deux plaques en contact avec ladite cavité.

Cependant ces systèmes donnent une lecture de la température assez indirecte, compte tenu des différents flux thermiques et gradients de température qui s'installent au sein de la coquille et dans la pièce moulée en cours de refroidissement. La publication « Heat fluxes at metal-mold interface during casting solidification » par A. Sabau, parue dans Light Metals 2006, p. 827-832, décrit un dispositif expérimental dans lequel une sonde thermique en couches minces a été posée sur la surface interne de la cavité de coulée d'une coquille, de manière à laisser une trace visible sur la pièce moulée. Ce procédé donne sûrement une valeur particulièrement représentative de la température du métal en cours de solidification, mais le dispositif est beaucoup trop fragile pour que l'on puisse envisager son utilisation dans un moule utilisé dans une installation industrielle.

La demanderesse a constaté que l'état de la technique ne décrit pas de procédé permettant d'ajuster le procédé de refroidissement à la réalité instantanée du moule. Un problème que la présente invention cherche à résoudre est de fournir un procédé de refroidissement forcé d'un moule à injection qui tient compte au mieux de la température locale réelle de la matière en fusion introduite dans le moule, qui soit facile à utiliser, qui ne nécessite pas une modification significative des coquilles formant le moule, qui s'adapte à un grand nombre de types de moules à injection, qui permette d'utiliser les dispositifs de jet cooling connus, et dont l'installation et l'utilisation ne perturbent en rien le procédé industriel qui doit répondre à des fortes contraintes de productivité, y compris lors du changement de moule.

### Objets de l'invention

Selon l'invention le problème est résolu par un procédé qui utilise un nouveau type de doigt de refroidissement incorporant directement la sonde de température dans un orifice borgne aménagé dans l'enveloppe externe du doigt, entre la surface externe et le canal de refroidissement, selon la revendication 1.

L'invention présente de nombreux avantages, par rapport à l'art antérieur décrit ci-dessus. Tout d'abord elle intègre, au sein d'un même organe mécanique, les fonctions respectives de refroidissement et de mesure de la température. Cette intégration permet d'obtenir, de manière précise et sensiblement immédiate, une valeur représentative de la température du métal, à savoir du métal fondu, du métal en cours de solidification et du métal en cours de refroidissement. Par ailleurs, la solution proposée par l'invention ne perturbe pas le procédé industriel de moulage, étant donné que les éléments mécaniques dédiés à la mesure de température sont intégrés au doigt de refroidissement, qui est déjà classiquement utilisé.

Par ailleurs, l'invention permet un traitement de l'information qui est simplifié par rapport à l'art antérieur. En effet, selon l'invention, le trou borgne assurant la réception de la sonde de température débouche du côté extérieur du moule, à savoir à l'opposé du métal fondu. Par conséquent, la liaison entre la sonde de température et l'unité centrale de traitement peut être réalisée de manière simple, notamment via une communication filaire, sans avoir à traverser les parois du moule.

On comparera la solution proposée par l'invention avec celle faisant intervenir une plaque de refroidissement, intercalée entre deux parois du moule. Dans ce cas, la liaison entre cette plaque et les moyens de traitement est nettement plus complexe. En effet, dans le cas d'une communication filaire, les moyens de liaison doivent nécessairement traverser les parois du moule.

Un moyen de l'invention est un doigt de refroidissement pour le contrôle de la température locale d'une pièce lors de son moulage par introduction d'une matière en fusion dans un moule permanent, ledit doigt de refroidissement comprenant un corps allongé possédant une paroi périphérique extérieure destinée à pénétrer à travers une paroi dudit moule, ainsi qu'une extrémité longitudinale destinée à être en contact avec ladite matière en fusion, ou à proximité immédiate de ladite matière en fusion, le corps comprenant au moins un canal de circulation d'un fluide caloporteur, ledit doigt de refroidissement étant caractérisé en ce que le corps comprend en outre au moins un trou borgne, distinct dudit canal de circulation, ledit trou borgne étant apte à recevoir des moyens de mesure de la température. Ledit canal de circulation d'un fluide caloporteur est rectiligne. Son diamètre est avantageusement compris entre 1,5 mm et 6 mm.

De manière très avantageuse ledit corps allongé forme une seule pièce ; cela économise le temps de son assemblage, et minimise également le risque de fuites aux points d'assemblage dans un environnement marqué par des gradients thermiques.

Ledit trou borgne prend la forme d'un canal de faible diamètre, typiquement entre environ 0,3 mm et environ 3 mm ; ce diamètre est avantageusement sensiblement constant. Ledit canal, borgne, peut être rectiligne, et/ou il peut comprendre au moins une portion recourbée, en particulier une portion recourbée séparant deux tronçons rectilignes. Il débouche avantageusement sur l'extrémité du corps, opposée au moule. La plus petite distance séparant, en service, le trou borgne et la paroi périphérique du corps est avantageusement comprise entre 2,0 mm et 7,0 mm.

Ledit doigt de refroidissement comprend deux trous borgnes, en particulier disposés de manière symétrique par rapport à l'axe principal du corps, vus en bout.

Un autre moyen de l'invention est un ensemble de contrôle comprenant au moins un doigt de refroidissement selon l'invention, ainsi qu'au moins un organe de mesure de température, ledit organe de mesure de température étant reçu dans un trou borgne dudit doigt de refroidissement, ledit ensemble comprenant en outre une unité centrale comprenant un microprocesseur, ainsi que des moyens de transmission entre ladite unité centrale et ledit au moins un organe de mesure de température. Lequel ledit organe de mesure de température peut notamment être un thermocouple ou une sonde platine. Il peut être inséré dans ledit trou borgne, de préférence jusqu'au fond afin que la mesure soit représentative de la température de la matière injectée dans le moule. Avantageusement ladite unité de commande est apte à commander un organe auxiliaire de refroidissement, adapté pour diriger un fluide caloporteur dans le canal de circulation dudit doigt de refroidissement.

Un autre moyen de l'invention est un procédé pour le contrôle de la température locale d'une pièce lors de son moulage par introduction d'une matière en fusion dans un moule permanent, au moyen d'un ensemble de contrôle selon l'invention, procédé dans lequel :
- on introduit de la matière en fusion dans ledit moule,
- on réalise au moins une séquence dite de refroidissement-évacuation, au cours de laquelle on admet tout d'abord un fluide caloporteur dans le canal principal du doigt de refroidissement, afin de refroidir la matière injectée dans le moule, puis on évacue la fraction résiduelle dudit fluide caloporteur au moyen d'un fluide d'évacuation,
- on réalise au moins une mesure de la valeur d'un paramètre représentatif de la température, par l'intermédiaire desdits moyens de mesure.

On peut réaliser plusieurs mesures ponctuelles de la valeur dudit paramètre représentatif de la température, notamment à une fréquence prédéterminée. On peut réaliser un enregistrement de la valeur dudit paramètre représentatif de la température, notamment à des fins de traçage.

De manière très avantageuse on compare la valeur mesurée dudit paramètre avec une valeur maximale ou une valeur minimale prédéterminée et, dans le cas où cette valeur mesurée est supérieure à ladite valeur maximale ou inférieure à ladite valeur minimale, on modifie le déroulement d'au moins une séquence de refroidissement - évacuation. Cette modification peut comporter notamment une modification d'au moins un des paramètres de contrôle de l'injection du fluide caloporteur, ces paramètres étant au moins le débit, la pression et la durée d'injection de fluide caloporteur. Alternativement ou en plus, la modification peut se faire aussi en réalisant au moins une séquence supplémentaire de refroidissement - évacuation. Elle peut aussi concerner la température dudit fluide caloporteur injecté.

L'objet de l'invention est un procédé pour le contrôle de la température locale d'une pièce lors de son moulage par introduction d'une matière en fusion dans un moule permanent, au moyen d'un ensemble de contrôle comprenant au moins un doigt de refroidissement pour le contrôle de la température locale d'une pièce lors de son moulage par introduction d'une matière en fusion dans un moule permanent, ainsi qu'au moins un organe de mesure de la température, ledit organe de mesure de température étant reçu dans une trou borgne dudit doigt de refroidissement, ledit ensemble comprenant en outre une unité centrale comprenant un microprocesseur, ainsi que des moyens de transmission entre ladite unité centrale et ledit au moins un organe de mesure de température,
ledit doigt de refroidissement comprenant un corps allongé, de préférence formant une seule pièce, ledit corps allongé possédant une paroi périphérique extérieure destinée à pénétrer à travers une paroi dudit moule, ainsi qu'une extrémité longitudinale destinée à être en contact avec ladite matière en fusion, ou à proximité immédiate de ladite matière en fusion, le corps comprenant au moins un canal de circulation d'un fluide caloporteur, ledit canal de cricultation étant rectiligne, et ledit corps comprend en outre au moins un trou borgne, distinct dudit canal de circulation, ledit trou borgne étant apte à recevoir des moyens de mesure de la température,
et au moins un desdits doigts de refroidissement présentant deux trous borgnes, un moyen de mesure de la température étant reçu dans chacun des deux trous borgnes,
ledit procédé étant caractérisé en ce que :
   - on introduit de la matière en fusion dans ledit moule,
   - on réalise au moins une séquence dite de refroidissement-évacuation, au cours de laquelle on admet tout d'abord un fluide caloporteur dans le canal principal du doigt de refroidissement, afin de refroidir la matière injectée dans le moule, puis on évacue la fraction résiduelle dudit fluide caloporteur au moyen d'un fluide d'évacuation,
   - on réalise au moins une mesure de la valeur d'un paramètre représentatif de la température, par l'intermédiaire desdits moyens de mesure,
   - on compare pour au moins un des doigts de refroidissement comportant deux moyens de mesure de la température les valeurs de températures déduites desdites valeurs représentatives de la température (ou directement lesdites valeurs représentatives de la température) fournies au même instant par l'un et l'autre desdits deux moyens de mesure de la température,
   - dans le cas où la valeur absolue de la différence entre ces deux valeurs dépasse un seuil prédéfini, une alerte est donnée, et/ou l'actionnement des séquences de refroidissement - évacuation est interrompu, et/ou le cycle de moulage d'une pièce est interrompu et/ou le prochain cycle de moulage n'est pas déclenché.

### Brève description des figures

D'autres avantages de l'invention apparaîtront à la lecture de la description de quatre modes de réalisation de l'invention, donnée ci-dessous à titre purement indicatif et non limitatif, en référence aux dessins annexés dans lesquels :
La figure 1 est une vue de face, illustrant un dispositif de contrôle de la température utilisable dans le procédé selon l'invention.
La figure 2 est une vue de face, analogue à la figure 1, illustrant un autre dispositif de contrôle de la température utilisable dans le procédé selon l'invention.
La figure 3 est une vue de face, analogue à la figure 1, illustrant un premier mode de réalisation d'undispositif de contrôle de la température qui est utilise dans le procédé selon l'invention.
La figure 4 est une vue en bout, illustrant le dispositif de contrôle de la température de la figure 3.
La figure 5 est une vue de face, analogue à la figure 1, illustrant un deuxième mode de réalisation d'un dispositif de contrôle de la température qui est utilisé dans le procédé selon l'invention
La figure 6 est une vue en bout, illustrant le dispositif de contrôle de la température de la figure 5.
La figure 7 est dérivée de la figure 1 et montre une variante de ce dispositif.

Les signes de référence suivants sont utilisés sur les figures et dans la description détaillée qui suit :

| | | | |
|---|---|---|---|
| 1 | Doigt de refroidissement | 2 | Corps |
| 11 | Organe auxiliaire | 12,13 | Embouts |
| 15 | Embout fileté | 20 | Extrémité longitudinale intérieure de 2 |
| 21 | Extrémité longitudinale extérieure de 2 | 30 | Base |
| 35 | Fût principal | 40 | Col terminal |
| 41 | Extrémité libre | 42,44 | Epaulements |
| 50 | Canal principal | 51,52 | Tronçons de 50 |
| 53 | Taraudage | 55 | Tube |
| 56 | Unité centrale | 57 | Ligne de commande |
| 60 | Trou | 62 | Extrémité de 60 (fond du trou) |
| 63 | Extrémité de 60 (débouché du trou) | 64 | Ligne de transmission |
| 72, 74 | Electrovannes | 73 | Connecteur |
| | | 82,83 | Alimentation en liquide et air |
| 84 | Purge | 85 | Conduit d'entrée |

### Description détaillée

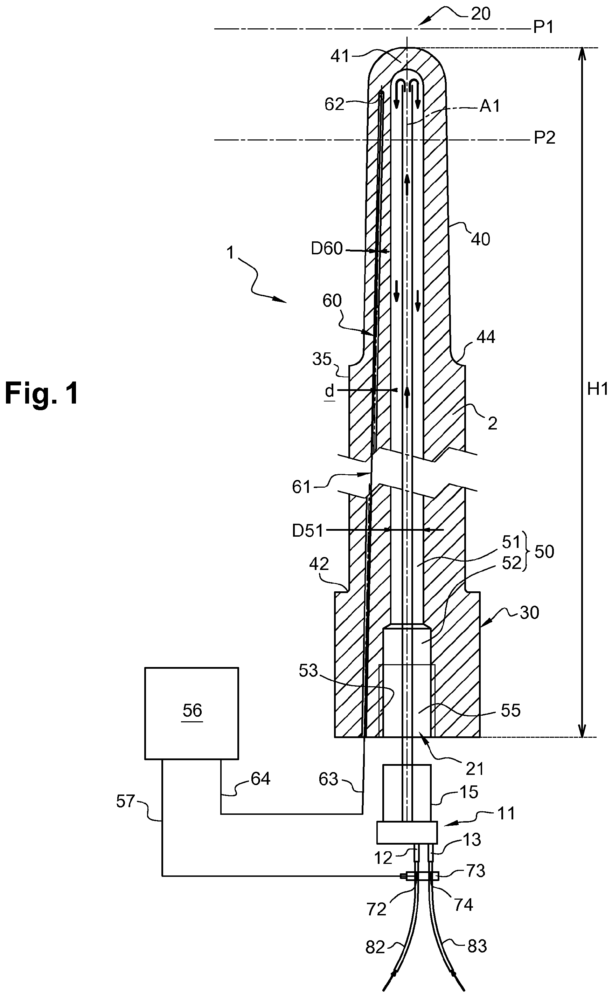

La figure 1 illustre un premier mode de réalisation d'un dispositif de contrôle de la température utilisable dans le procédé selon l'invention. Ce dispositif comprend tout d'abord un doigt de refroidissement, lequel est désigné dans son ensemble par la référence 1. On note **A1** l'axe longitudinal principal du doigt, qui est vertical sur cette figure 1. Une fois que le doigt est installé dans une partie de moule, non représentée sur la figure 1, cet axe principal s'étend transversalement par rapport à cette partie de moule. En d'autres termes, le doigt s'étend à travers cette partie de moule, entre les faces respectivement intérieure et extérieure de cette dernière.

Ce doigt de refroidissement comporte tout d'abord un corps 2, réalisé en un matériau conducteur de la chaleur, tel que notamment des aciers au carbone fortement alliés à base de chrome, molybdène et vanadium, et de préférence des alliages aptes à une utilisation à haute température.

Ce corps **2** est fixé, par sa face périphérique extérieure, sur la partie de moule précitée. Cette fixation, qui est de type connu en soi, est notamment réalisée par vissage. A cet effet, la face extérieure précitée peut être munie de moyens appropriés, non représentés. En référence à l'axe **A1,** le corps comprend deux extrémités longitudinales, dont l'une **20** est dite intérieure, car elle est adjacente au métal fondu en service, et dont l'autre **21** est dit extérieure, car elle est opposée à ce métal.

De manière classique, le corps comprend différentes régions concentriques, dont la section transversale diminue depuis l'extrémité extérieure **21** vers l'extrémité intérieure **20.** Comme montré sur cette figure 1, le corps **2** comprend une base **30,** un fût principal **35,** ainsi qu'un col terminal **40.** Ces éléments constitutifs sont deux à deux séparés par des épaulements respectifs **42** et **44.** La géométrie du corps n'est pas une caractéristique essentielle de l'invention, de sorte qu'elle ne sera pas décrite plus en détail. Cependant, on note que l'invention s'applique en particulier aux doigts de refroidissement présentant un diamètre extérieur au niveau du col terminal **40** qui ne dépasse pas 12 mm.

L'extrémité libre **41** du col, de forme arrondie, est destinée à se trouver au contact de la matière en fusion ou à proximité immédiate de cette dernière. Sur la figure 1, on a noté en traits mixtes deux positions typiques de la face interne de la partie de moule, correspondant à l'interface avec le métal fondu. La ligne **P1** illustre une face interne située au-dessus de l'extrémité **41,** de sorte que cette dernière n'est pas en contact immédiat avec le métal fondu. En revanche, la ligne **P2** illustre une face interne située au-dessous de l'extrémité **41,** de sorte que cette dernière baigne dans ce métal fondu. Quoi qu'il en soit, cette extrémité est positionnée de sorte que le doigt **1** est apte à refroidir la matière en fusion, comme on va le voir ci-après.

Le corps **2** est creusé d'un canal principal **50,** en l'occurrence rectiligne, qui s'étend parallèlement à l'axe longitudinal **A1.** Ce canal débouche sur l'extrémité extérieure **21,** mais en revanche pas sur l'extrémité intérieure **20.** Ce canal **50** se compose de deux tronçons successifs, dont l'un **51** est ménagé à la fois dans le col, le fût et une partie de la base. En revanche, l'autre tronçon **52,** de plus grand diamètre, est ménagé uniquement dans la base. Au voisinage de son débouché, les parois de ce tronçon **50** forment un taraudage **53,** destiné à coopérer avec un organe auxiliaire **11,** de type connu en soi.

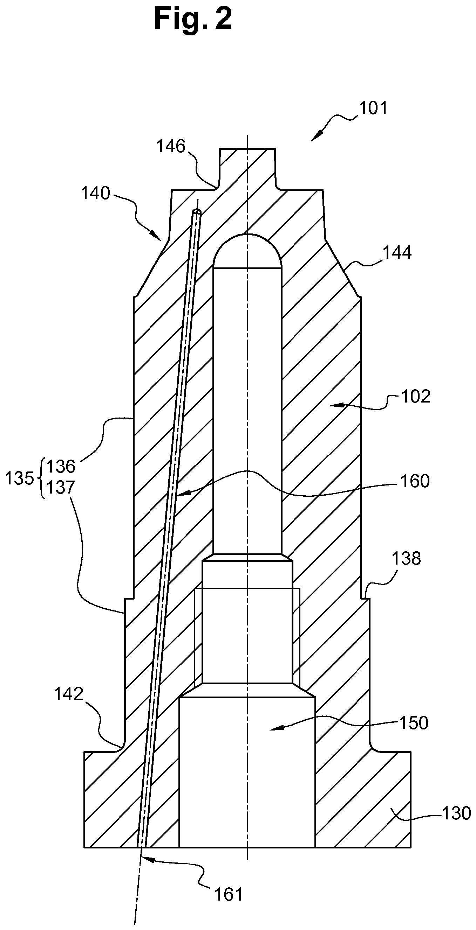

Comme cela est montré schématiquement sur la figure 1 (mais pas sur les figures 2, 3 et 5), cet organe auxiliaire **11** est relié à un tube cylindrique **55** qui, lorsque le dispositif est en fonctionnement, est logé dans le canal principal **50** et s'étend sur la plus grande longueur de ce dernier, presque jusqu'à son extrémité. C'est par ce tube **55** qu'est injectée dans le canal **50** une quantité de fluide caloporteur pour le refroidissement du doigt, et c'est par ce tube **55** qu'est injecté ensuite de l'air pour évacuer ce fluide du le canal **50** ; ces deux directions d'écoulement de fluide sont marquées par des flèches sur la figure 1. Ce cycle est appelé ici cycle de refroidissement - évacuation.

L'organe auxiliaire **11** est doté de deux embouts **12** et **13,** l'un **12** relié à une alimentation en un fluide de refroidissement **82** (appelé ici aussi fluide caloporteur, typiquement de l'eau), l'autre **13** relié à une alimentation en air comprimé **83,** aptes à injecter dans le tube **55** successivement ces deux fluides, à savoir de l'eau (qui, en s'évaporant, refroidit le corps **2** et en particulier son col terminal **40**) et de l'air. Chacune des ces deux alimentations **82,83** est pourvue d'une électrovanne **72,74 ;** ces dernières sont commandées par un microprocesseur, selon une séquence qui peut être programmée par un technicien pour chaque type de pièce moulée. L'organe **11** est par ailleurs pourvu de manière classique d'un embout fileté **15,** propre à être monté de façon amovible et étanche sur le taraudage **53** du doigt de refroidissement **1.** Les électrovannes **72,74** sont avantageusement situées dans un connecteur unique **73** qui peut se monter directement sur les embouts **11,12** ou qui peut être situé à une certaine distance desdits embouts.

Selon un aspect essentiel de l'invention, le corps **2** est en outre pourvu d'un trou borgne **60,** distinct du canal principal **50.** Ce trou **60** débouche sur l'extrémité longitudinale extérieure **21,** mais en revanche pas sur l'extrémité intérieure **20.** Ce trou **60** est réalisé par tout procédé approprié. On citera par exemple un procédé de type mécanique, notamment par perçage ou alésage.

Le trou **60,** qui s'étend ici de manière rectiligne, est légèrement décalé par rapport à l'axe longitudinal **A1.** L'angle de décalage par rapport à l'axe du canal principal **50** permet à ce trou **60** d'être globalement équidistant par rapport aux parois extérieures du corps, ainsi qu'à ses parois intérieures bordant le canal **50.**

On va maintenant donner, à titre d'exemples non limitatifs, différentes valeurs dimensionnelles du doigt de refroidissement **1** décrit ci-dessus :
- hauteur totale *H1* entre 50 mm et 500 mm ;
- diamètre *D51* du canal au niveau de son tronçon principal **51,** entre 1,5 mm et 6 mm ;
- diamètre *D60* du trou entre 0,3 mm et 3,0 mm ;
- distance d entre le trou et le canal, prise perpendiculairement à l'axe de ce trou, entre 3 mm et 10 mm ;
- distance *D* entre le trou **60** et la surface externe du doigt de refroidissement, prise perpendiculairement à l'axe de ce trou, entre 3 mm et 10 mm ;
- diamètre extérieur au niveau du col terminal **40** ne dépassant pas 12 mm.

Le trou **60** reçoit des moyens de mesure de la température, qui sont formés par une sonde filiforme **61.** Cette sonde, de type connu en soi, est par exemple un thermocouple ou une sonde platine. La sonde est fixée par rapport aux parois du trou **60,** par tous moyens appropriés, notamment par vissage. Cette sonde **61** présente des dimensions longitudinales supérieures à celles du trou **60.** Par conséquent, une première extrémité **62** de la sonde s'étend à proximité du fond du trou, alors que l'autre extrémité **63** dépasse hors du débouché de ce trou. Cette extrémité **63** est reliée, via une ligne de transmission **64,** à une unité centrale **56** de contrôle et de commande, qui comprend un microprocesseur. Cette dernière est en outre reliée, via une ligne de commande **57,** aux électrovannes **72,74** décrites ci-dessus.

La mise en oeuvre du dispositif de contrôle de la température, décrit ci-dessus, va maintenant être explicitée dans ce qui suit.

Lorsque de la matière à l'état de fusion est coulée dans le moule, équipé du doigt de refroidissement **1,** les électrovannes **72,74** sont activées de manière à réaliser des séquences successives de refroidissement puis d'évacuation, comme décrites ci-dessus. Ces séquences peuvent être réalisées de manière prédéfinie, notamment à une fréquence prédéterminée et/ou avec un cyclage prédéterminé.

Par ailleurs, on réalise des mesures de la valeur d'un paramètre représentatif de la température, au moyen de la sonde **61.** Comme mentionné ci-dessus, la température déterminée par la sonde est représentative de la température effective de la matière fondue, étant donné la proximité immédiate entre cette sonde et cette matière fondu. À cet égard, on peut procéder à un étalonnage préalable, afin de déterminer la correspondance entre ces deux températures, sachant que la température de la matière à l'état de fusion est connue par ailleurs. Ces mesures de la valeur du paramètre représentatif de la température peuvent être réalisées de manière continue ou bien ponctuelle, en particulier à une fréquence prédéfinie. À titre d'exemple, on peut procéder à une détermination de la température après la fin de l'injection de la matière à l'état de fusion dans le moule et après chaque séquence de refroidissement - évacuation du moule.

Le paramètre représentatif de la température peut être, selon la nature de la sonde, par exemple une tension, un courant, ou une résistance. Les valeurs mesurées de ce paramètre sont transmises à l'unité centrale **56,** ou à une unité dédiée au traitement et l'enregistrement de ces signaux (non montrée sur les figures), où elles peuvent faire l'objet d'au moins une étape de traitement, parmi celles mentionnées ci-après.

Ces valeurs peuvent tout d'abord être mémorisées, afin de permettre un traçage du procédé de fabrication de la pièce de fonderie. Ce traçage peut en particulier s'inscrire, dans le cadre d'une démarche d'assurance qualité.

Ces valeurs peuvent également être utilisées, afin d'initier une étape de rétroaction au moyen de l'unité centrale. En particulier, si au moins une valeur mesurée par la sonde **61** est supérieure à une valeur seuil prédéterminée, l'unité centrale commande l'organe auxiliaire, via la ligne **57.** Cette opération de commande peut conduire à la modification du déroulement d'au moins une séquence de refroidissement - évacuation. Cette modification peut comporter notamment une modification d'au moins un des paramètres de contrôle de l'injection du fluide caloporteur, ces paramètres étant au moins le débit, la pression et la durée d'injection de fluide caloporteur. A titre d'exemple on peut mettre en oeuvre au moins une séquence supplémentaire de refroidissement - évacuation, au moyen de cet organe auxiliaire **11,** afin de faire redescendre la température de la matière fondue introduite dans le moule.

La figure 2 illustre un second mode de réalisation d'un doigt de refroidissement utilisable dans le procédé selon la présente invention. Sur cette figure 2, les éléments mécaniques analogues à ceux de la figure 1 y sont affectés des mêmes numéros de référence, augmentés du nombre **100.**

Le doigt de refroidissement, représenté sur cette figure 2, diffère de celui **1** de la figure 1 essentiellement en ce qu'il présente un corps **102** dont la géométrie est différente. De façon plus précise, le fût principal **135** est réalisé en deux éléments **136** et **137** de sections transversales différentes, reliés par un épaulement supplémentaire **138.** Par ailleurs, le col **140** est pourvu d'un téton terminal **146.** Enfin, le col et le fût sont reliés par une rampe **140,** dont la dimension axiale est plus élevée que celle de l'épaulement **40** du premier mode de réalisation. Le canal de circulation **150** est rectiligne, et la même remarque s'applique au trou borgne **160.**

Les différences qui existent entre les doigts respectifs **1** et **101** ne sont pas relatives à la mesure de la température, ainsi qu'au traitement des valeurs ainsi mesurées. En effet, comme dans le premier mode de réalisation, le doigt **101** est pourvu d'un unique trou borgne rectiligne **160** permettant la réception d'une unique sonde **161** de mesure de température.

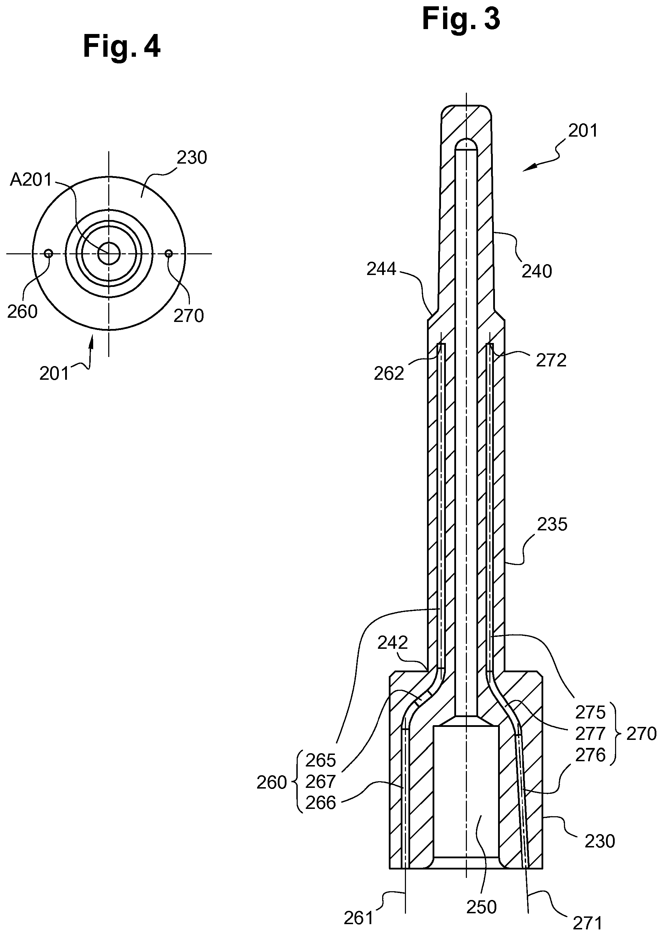

Les figures 3 et 4 illustrent un premier mode de réalisation d'un doigt de refroidissement utilisé dans le procédé selon la présente invention. Sur ces figures 3 et 4, les éléments mécaniques analogues à ceux de la figure 1 y sont affectés des mêmes numéros de référence, augmentés du nombre 200.

Le doigt de refroidissement **201,** représenté sur ces figures 3 et 4, diffère de celui **1** de la figure 1 tout d'abord en ce qu'il comprend deux trous borgnes **260** et **270,** s'étendant de manière symétrique par rapport à l'axe longitudinal **A201.** Par ailleurs, chaque trou **260, 270** comprend deux portions rectilignes **265, 275** et **266, 276,** raccordées mutuellement par un tronçon médian **267, 277** de forme recourbée.

On notera que, dans ce troisième mode de réalisation, la section transversale du fût principal **235** est sensiblement inférieure à celle de la base **230.** Dans ces conditions, la présence de ce tronçon recourbé **267, 277** permet aux trous borgnes d'être situés sensiblement à égale distance des parois respectivement intérieure et extérieure du corps.

On notera également que, dans ce mode de réalisation, chaque trou borgne ne s'étend pas dans le col terminal **240.** En effet, ce col est destiné à être immergé entièrement dans la matière à l'état de fusion, et l'épaisseur de paroi est trop fine à cet endroit pour permettre l'aménagement d'un trou borgne.

Comme dans les modes de réalisation précédents, chaque trou borgne reçoit une sonde filiforme respective **261, 271,** qui doit être suffisamment souple pour pouvoir s'adapter au tronçon recourbé **267, 277** et suffisamment rigide pour pouvoir être enfilée jusqu'au bout du trou borgne. Les extrémités de chaque sonde, en saillie en dehors des trous de réception, sont typiquement reliées à une unique unité de commande non représentée.

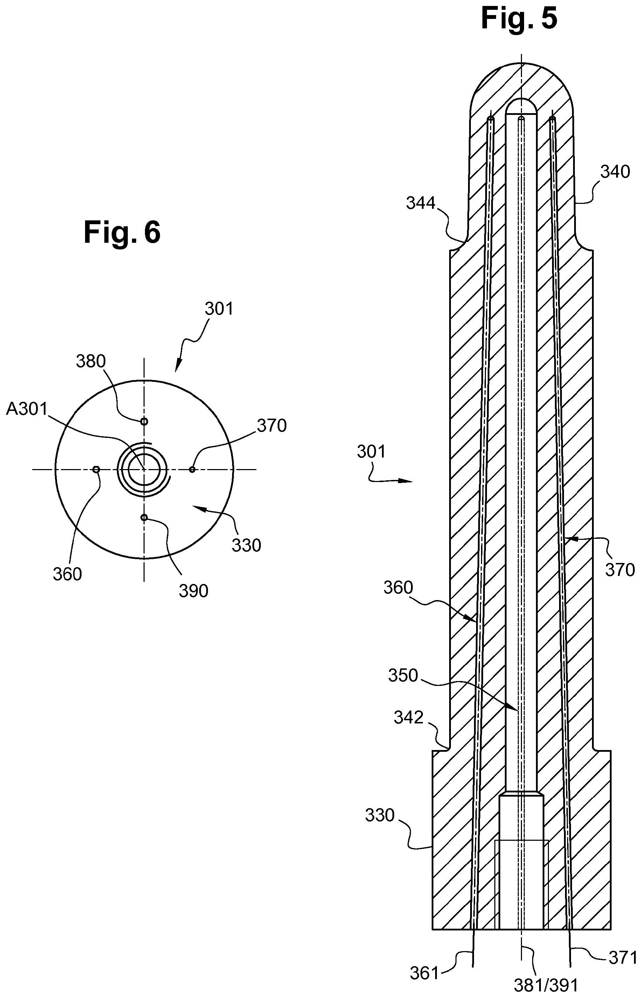

Les figures 5 et 6 illustrent un deuxième mode de réalisation d'un doigt de refroidissement qui est utilisé dans le procédé selon la présente invention. Sur ces figures 5 et 6, les éléments mécaniques analogues à ceux de la figure 1 y sont affectés des mêmes numéros de référence, augmentés du nombre 300.

Le doigt de refroidissement **301,** représenté sur ces figures 5 et 6, diffère de celui **1** de la figure 1 en ce qu'il comporte quatre trous borgnes **360, 370, 380** et **390.** Comme montré sur la figure 6, ces trous sont rectilignes, et sont répartis angulairement de manière régulière, autour de l'axe principal **A301.** Chaque trou borgne reçoit une sonde filiforme respective **361, 371, 381, 391.** Les extrémités de chaque sonde, en saillie en dehors des trous de réception, sont typiquement reliées à une unique unité de commande non représentée.

On note que dans les modes de réalisation à plusieurs trous borgnes qui sont montrés, respectivement, sur les figures 3 et 4 et sur les figures 5 et 6, la plus petite distance séparant le trou borgne et la paroi périphérique du corps est la même pour chacun des trous borgnes.

Le fait de prévoir plusieurs sondes de mesure de température, reçues dans des trous borgnes respectifs, peut présenter des avantages spécifiques. Cela permet en effet de pouvoir procéder, en un même instant, à plusieurs mesures de température indépendantes. Dans ces conditions, l'unité centrale procède typiquement au calcul d'une moyenne, par exemple arithmétique ou géométrique, de ces mesures. On obtient alors une mesure moyennée, dont la précision est supérieure à celle d'une mesure individuelle. Alternativement, on peut exploiter chacune de ces mesures individuellement. Cela peut présenter un intérêt notamment dans deux situations. La première situation est celle d'un moule dont la forme à proximité du corps du doigt de refroidissemement est dissymétrique, ce qui peut conduire à une différence de température de la matière en fusion introduite dans ledit moule au cours de son refroidissement.

La présence de plusieurs sondes de mesure de température sur le même doigt de refroidissement facilité aussi la détection d'un percement local d'un trou borgne suite à l'usure de sa paroi métallique ; dans un cas extrême le trou borgne sera envahi par du matériau à l'état de fusion, ce qui conduit, sur cette sonde, à une valeur de température statistiquement aberrante.

Plus précisément, dans le procédé selon l'invention, on compare pour au moins un des doigts de refroidissement comportant deux moyens des mesure de la température les valeurs représentatives de la température fournies au même instant par l'un et l'autre desdits deux moyens de mesure de la température. Dans le cas où la valeur absolue de la différence entre ces deux valeurs dépasse un seuil prédéfini, une alerte est donnée, et/ou l'actionnement des séquences de refroidissement - évacuation est interrompu, et/ou le cycle de moulage d'une pièce est interrompu et/ou le prochain cycle de moulage de pièces n'est pas déclenché. Dans ce dernier cas la machine de coulée s'arrête.

On peut prévoir aussi deux seuils successifs pour ladite valeur absolue : après le dépassement du premier seuil une alerte est donnée, et après le dépassement du deuxième seuil, supérieur au premier, le cycle de moulage en cours est interrompu ou et/ou le prochaine cycle de moulage de pièces n'est pas déclenché.

Bien évidemment, au lieu de comparer les valeurs représentatives de la température mesurées par chacune des deux sondes, et de déterminer la valeur absolue de la différence de ces valeurs, on peut aussi déterminer la température représentée par ces valeurs mesurées, et déterminer la valeur absolue de la différence de ces deux températures ; cette variante nécessite des étapes de traitement de données supplémentaires pour calculer la température à partir de la valeur représentative de cette température qui est mesurée par lesdites sondes, ce qui est fait typiquement en appliquant la courbe de calibration propre à chaque sonde.

Comme variante par rapport aux modes de réalisation des figures 3 à 6, on peut prévoir que les trous borgnes présentent des diamètres différents les uns des autres. Cela présente des avantages spécifiques, notamment en ce qu'il permet de loger des sondes de température de type différent (par exemple un thermocouple et une sonde platine). D'une manière générale, le diamètre des trous borgnes est constant, et peut être compris typiquement entre 0,3 mm et 3 mm. Il n'est pas souhaitable qu'il y ait trop de jeu entre la sonde et la paroi du trou borgne : le bon diamètre du trou (pour une sonde donnée) est le diamètre le plus petit qui permet à la sonde d'être enfilée complètement ; de même, le bon diamètre de la sonde (pour un trou donné) est le diamètre le plus grand qui permet à la sonde d'être enfilée complètement. Dans le cas où les trous borgnes présentent des diamètres différents, il est néanmoins avantageux que la plus petite distance séparant le trou borgne et la paroi périphérique du corps est la même pour chacun des trous borgnes.

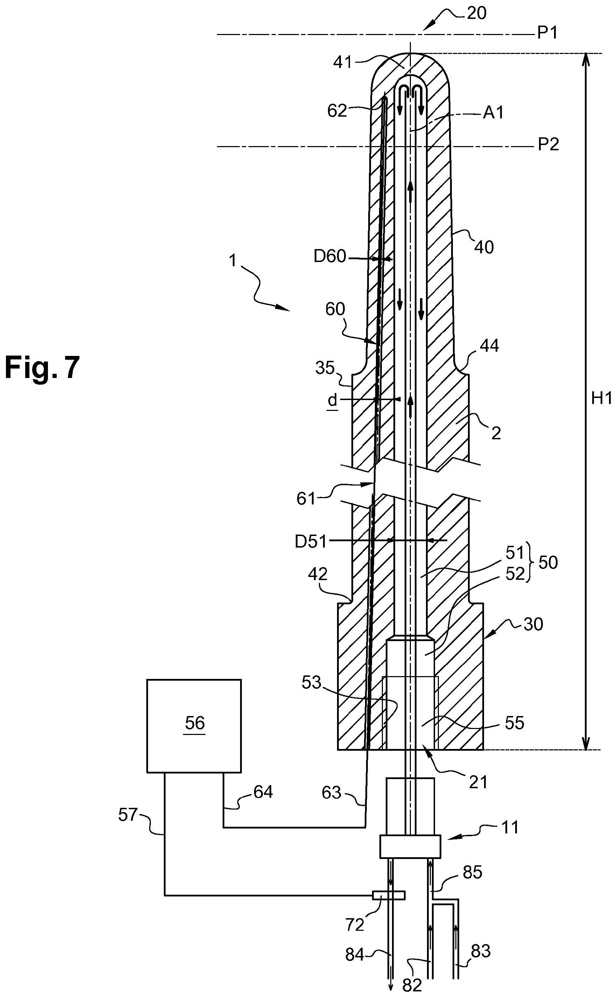

Le figure 7 montre une variante avantageuse du mode de réalisation de la figure 1. La différence se situe au niveau de l'organe auxiliaire **11** qui est relié, d'une part, à un conduit d'entrée 85, et d'autre part à un conduit de sortie **84,** appelé aussi « purge ». Le conduit d'entrée **85** est alimenté alternativement avec le fluide de refroidissement (typiquement de l'eau) qui arrive par l'alimentation en fluide de refroidissement **82,** et avec de l'air comprimé qui arrive par l'alimentation en air **83.** Le conduit de purge **84** peut être ouvert et fermé à l'aide d'une électrovanne **72.** La vérification de l'étanchéité du système, mentionnée ci-dessus, peut se faire en injectant de l'air par le conduit **83,** l'électrovanne **72** étant fermée.

Comme expliqué ci-dessus, le doigt de refroidissement **1** selon l'invention, muni de sa sonde de température enfilée dans le trou borgne **60,** peut être intégré dans un ensemble de contrôle, qui comprend en outre une unité centrale **56** comprenant un microprocesseur, ainsi que des moyens de transmission **64** entre ladite unité centrale et ledit au moins un organe de mesure de température. Ladite unité de commande est apte à commander un organe auxiliaire de refroidissement, adapté pour diriger un fluide caloporteur dans le canal de circulation dudit doigt de refroidissement.

Nous décrivons ici un mode de réalisation typique d'un procédé de moulage par injection qui utilise cet ensemble de contrôle. Dans ce procédé
- on introduit de la matière en fusion dans ledit moule, par exemple par injection à haute pression, par injection à basse pression, ou par coulage,
- on réalise au moins une séquence dite de refroidissement-évacuation, au cours de laquelle on admet tout d'abord un fluide caloporteur dans le canal principal du doigt de refroidissement, afin de refroidir la matière introduite dans le moule, puis on évacue la fraction résiduelle dudit fluide caloporteur au moyen d'un fluide d'évacuation,
- on réalise au moins une mesure de la valeur d'un paramètre représentatif de la température, par l'intermédiaire desdits moyens de mesure.

La mesure de la température peut être effectuée lorsque le métal introduit dans le moule est encore liquide, et/ou lorsqu'il est en cours de refroidissement, et/ou pendant le refroidissement du métal solidifié.

Ces mesures peuvent être réalisées de manière ponctuelle, notamment à une fréquence prédéterminée. On peut réaliser un enregistrement de la valeur dudit paramètre représentatif de la température, notamment à des fins de traçage. Dans un mode de réalisation on compare la valeur mesurée dudit paramètre avec une valeur maximale prédéterminée et, dans le cas où cette valeur mesurée est supérieure à ladite valeur maximale, on réalise au moins une séquence supplémentaire de refroidissement - évacuation. L'invention permet également de suivre l'évolution de la température locale du métal introduit dans le moule ; cette courbe de refroidissement peut être critique dans le cas de certains alliages, car il est connu que la structure du métal peut évoluer même après sa solidification par des processus de diffusion et précipitation.

L'invention peut s'appliquer notamment au moulage de pièces métalliques en alliages légers (alliages de magnésium, alliages d'aluminium), au moulage de pièces en alliages de zinc, ou au moulage de pièces en polymère. Elle peut s'appliquer au moulage par injection (notamment à haute pression et à basse pression) et au moulage par gravité.

## Revendications

1. Procédé pour le contrôle de la température locale d'une pièce lors de son moulage par introduction d'une matière en fusion dans un moule permanent, au moyen d'un ensemble de contrôle comprenant au moins un doigt de refroidissement pour le contrôle de la température locale d'une pièce lors de son moulage par introduction d'une matière en fusion dans un moule permanent, ainsi qu'au moins un organe de mesure de température, ledit organe de mesure de température étant reçu dans un trou borgne (60) dudit doigt de refroidissement (1), ledit ensemble comprenant en outre une unité centrale (56) comprenant un microprocesseur, ainsi que des moyens de transmission entre ladite unité centrale et ledit au moins un organe de mesure de température,
ledit doigt de refroidissement comprenant un corps (2) allongé, de préférence formant une seule pièce, ledit corps allongé (2) possédant une paroi périphérique extérieure destinée à pénétrer à travers une paroi dudit moule, ainsi qu'une extrémité longitudinale destinée à être en contact avec ladite matière en fusion, ou à proximité immédiate de ladite matière en fusion, le corps comprenant au moins un canal de circulation (50) d'un fluide caloporteur, ledit canal de circulation (50) étant rectiligne, et ledit corps (2) comprenant en outre au moins un trou borgne (60), distinct dudit canal de circulation, ledit trou borgne étant apte à recevoir des moyens de mesure de la température, et le au moins un doigt de refroidissement présentant deux trous borgnes, un moyen de mesure de la température étant reçu dans chacun des deux trous borgnes ;
ledit procédé étant **caractérisé en ce que** :
- on introduit de la matière en fusion dans ledit moule,
- on réalise au moins une séquence dite de refroidissement-évacuation, au cours de laquelle on admet tout d'abord un fluide caloporteur dans le canal principal du doigt de refroidissement, afin de refroidir la matière injectée dans le moule, puis on évacue la fraction résiduelle dudit fluide caloporteur au moyen d'un fluide d'évacuation,
- on réalise au moins une mesure de la valeur d'un paramètre représentatif de la température, par l'intermédiaire desdits moyens de mesure ;
- on compare pour le au moins un doigt de refroidissement comportant deux moyens des mesure de la température les valeurs représentatives de la température fournies au même instant par l'un et l'autre desdits deux moyens de mesure de la température ;
- dans le cas où la valeur absolue de la différence entre ces deux valeurs dépasse un seuil prédéfini, une alerte est donnée, et/ou l'actionnement des séquences de refroidissement - évacuation est interrompu, et/ou le cycle de moulage d'une pièce est interrompu et/ou le prochain cycle de moulage n'est pas déclenché.

2. Procédé selon la revendication 1, dans lequel on réalise plusieurs mesures ponctuelles de la valeur dudit paramètre représentatif de la température, notamment à une fréquence prédéterminée.

3. Procédé selon l'une quelconque des revendications 1 et 2, dans lequel on réalise un enregistrement de la valeur dudit paramètre représentatif de la température, notamment à des fins de traçage.

4. Procédé selon l'une quelconque des revendications 1 à 3, dans lequel on compare la valeur mesurée dudit paramètre avec une valeur maximale ou minimale prédéterminée et, dans le cas où cette valeur mesuré est supérieure à ladite valeur maximale ou inférieure à ladite valeur minimale, on modifie au moins un des paramètres de contrôle de l'injection du fluide caloporteur, et de préférence au moins un des paramètres de contrôle sélectionnés dans le groupe formé par le débit, la pression et la durée d'injection de fluide caloporteur, et/ou on réalise au moins une séquence supplémentaire de refroidissement - évacuation.

5. Procédé selon l'une quelconque des revendications 1 à 4, caractérisé en que ledit canal de circulation (50) présente au niveau de son tronçon principal (51) un diamètre (D51) compris entre 1,5 mm et 6 mm.

6. Procédé selon l'une quelconque des revendications 1 à 5, **caractérisé en ce que** la section transversale desdits trous borgnes (60) est comprise entre environ 0,3 mm et environ 3 mm.

7. Procédé selon l'une quelconque des revendications 1 à 5, **caractérisé en ce que** la plus petite distance séparant, en service, les trous borgnes (60) et la paroi périphérique du corps est comprise entre 2,0 mm et 7,0 mm.

8. Procédé selon l'une quelconque des revendications 1 à 7, **caractérisé en ce que** lesdits trous borgnes sont rectilignes ou comprennent au moins une portion recourbée, en particulier une portion recourbée séparant deux tronçons rectilignes.

9. Procédé selon l'une quelconque des revendications 1 à 8, **caractérisé en ce que** lesdits trous borgnes débouchent sur l'extrémité du corps, opposée au moule.

10. Procédé selon l'une quelconque des revendications 1 à 9, **caractérisé en ce que** les trous borgnes sont disposés de manière symétrique par rapport à l'axe principal du corps, vus en bout.

11. Procédé selon la revendication 10, **caractérisé en ce que** la plus petite distance séparant, en service, les trous borgnes (60) et la paroi périphérique du corps est la même pour chacun des trous borgnes.

12. Procédé selon l'une quelconque des revendications 1 à 11, **caractérisé en ce que** ladite matière en fusion est un métal.

## Patentansprüche

1. Verfahren zur Steuerung der lokalen Temperatur eines Formteils während des Giessess durch Einbringen von geschmolzenem Material in eine Dauerform unter Verwendung einer Steuereinheit umfassed mindestens einen Kühlfinger zur Steuerung der lokalen Temperatur eines Formteils während des Giessens durch Einbringen von geschmolzenem Material in eine Dauerform, sowie mindestens ein Temperaturmesselement, wobei dieses Temperaturmesselement in einer Sackbohrung (60) dieses Kühlfingers (1) aufgenommen ist, und wobei diese Steuereinheit ferner umfasst eine Zentraleinheit (56) mit einem Mikroprozessor sowie Übertragungsmittel zwischen der Zentraleinheit und dem mindestens einen Temperaturmesselement,
wobei dieser Kühlfinger einen länglichen Körper (2), vorzugsweise aus einem einzigen Stück gebildet, umfasst, wobei dieser längliche Körper eine äussere Umfangswand aufweist, die zum Durchdringen einer Wand dieser Gussform bestimmt ist, und ein Längsende, das mit dem geschmolzenen Material oder in unmittelbarer Nähe des geschmolzenen Materials in Kontakt treten soll, wobei der Körper mindestens einen geraden Zirkulationskanal (50) für ein Wärmeträgerfluid aufweist, und wobei der Körper (2) ferner mindestens eine Sackbohrung (60) aufweist, die von dem Zirkulationskanal getrennt ist und zur Aufnahme von Temperaturmessgeräten geeignet ist,
und wobei der mindestens eine Kühlfinger zwei Sackbohrungen aufweist, wobei in jeder der beiden Sackbohrungen eine Temperaturmesseinrichtung aufgenommen ist ;
wobei das Verfahren **dadurch gekennzeichnet ist, dass** :
- geschmolzenes Material in die Gussform eingeführt wird,
- mindestens eine sogenannte Kühl- und Evakuierungssequenz durchgeführt wird, bei der zunächst ein Wärmeträgerfluid in den Hauptkanal des Kühlfingers eingeleitet wird, um das in die Gussform eingespritzte Material zu kühlen, und anschließend der Restanteil dieses Wärmeträgerfluids mittels eines Evakuierungsfluids entfernt wird,
- mit Hilfe der genannten Messmittel mindestens eine Messung des Wertes eines Parameters durchgeführt wird, der die Temperatur repräsentiert,
- bei mindestens einem der Kühlfinger, der zwei Temperaturmessgeräte umfasst, die von jedem der beiden Temperaturmessgeräte zum selben Zeitpunkt gelieferten Werte, die die Temperatur repräsentieren, verglichen werden,
- falls der absolute Wert der Differenz zwischen diesen beiden Werten einen vordefinierten Schwellenwert überschreitet, wird eine Warnung ausgegeben und/oder die Aktivierung der Kühl- und Evakuierungssequenzen wird unterbrochen und/oder der Giesszyklus eines Teils wird unterbrochen und/oder der nächste Giesszyklus wird nicht ausgelöst.

2. Verfahren nach Anspruch 1, bei dem mehrere punktuelle Messungen des Wertes des Parameters, der die Temperatur repräsentiert, insbesondere mit einer vorbestimmten Frequenz durchgeführt werden.

3. Verfahren nach Anspruch 1 oder 2, wobei der Wert des Parameters, der die Temperatur repräsentiert, insbesondere zu Aufzeichnungszwecken aufbewahrt wird.

4. Verfahren nach einem der Ansprüche 1 bis 3, wobei der Messwert dieses Parameters mit einem vorbestimmten Maximal- oder Minimalwert verglichen wird und, falls dieser Messwert größer als der Maximalwert oder kleiner als der Minimalwert ist, mindestens einer der Kontrollparameter der Wärmeträgerflüssigkeitseinspritzung geändert wird, vorzugsweise mindestens einer der Kontrollparameter aus der Gruppe, die durch Durchflussrate, Druck und Dauer der Wärmeträgerflüssigkeitseinspritzung gebildet wird, und/oder mindestens eine zusätzliche Kühl- und Evakuierungssequenz durchgeführt wird.

5. Verfahren nach einem der Ansprüch 1 bis 4, **dadurch gekennzeichnet, dass** der Zirkulationskanal (50) auf Höhe seines Hauptabschnitts (51) einen Durchmesser (D51) zwischen 1,5 mm und 6 mm aufweist.

6. Verfahren nach einem der Ansprüche 1 bis 5, **dadurch gekennzeichnet, dass** der Querschnitt der Sackbohrung (60) zwischen etwa 0,3 mm und etwa 3 mm liegt.

7. Verfahren nach einem der Ansprüche 1 bis 6, **dadurch gekennzeichnet, dass** der kleinste Abstand zwischen der Sackbohnrung (60) und der Umfangswand des Körpers im Betrieb zwischen 2,0 mm und 7,0 mm liegt.

8. Verfahren nach einem der Ansprüche 1 bis 7, **dadurch gekennzeichnet, dass** diese Sackbohrungen gerade sind oder mindestens einen gekrümmten Abschnitt aufweisen, insbesondere einen gekrümmten Abschnitt, der zwei gerade Abschnitte trennt.

9. Verfahren nach einem der Ansprüchr 1 bis 8, **dadurch gekennzeichnet, dass** diese Sackbohrungen sich zum gegenüberliegenden Ende des Körpers öffenen, gegenüber der Gussform.

10. Verfahren nach einem der Ansprüche 1 bis 9, **dadurch gekennzeichnet, dass** die Sackbohrungen symmetrisch zur Hauptachse des Körpers angeordnet sind, von der Stirnseite aus betrachtet.

11. Verfahren nach Anspruch 10, **dadurch gekennzeichnet, dass** der der kleinste Abstand zwischen der Sackbohrung (60) und der Umfangswand des Körpers im Betrieb für jede der Sackbohrungen gleich ist.

12. Verfahren nach Anspruch 1 bis 11, dadurch gekennnzeichnet, dass das geschmolzene Material ein Metall ist.

## Claims

1. A method for controlling the local temperature of a part during its molding by introducing molten material into a permanent mold, using a control assembly comprising at least one cooling finger for controlling the local temperature of a part during its molding by introducing molten material into a permanent mold, and comprising at least one temperature measuring element, said temperature measuring element being received in a blind hole (60) of said cooling finger (1), said assembly further comprising a central unit (56) comprising a microprocessor, and means for transmission between said central unit and said at least one temperature measuring element,
said cooling finger comprising an elongated body (2), preferably forming a single piece, said elongated body (2) having an outer peripheral wall intended to penetrate through a wall of said mold, and a longitudinal end intended to be in contact with said molten material, or in the immediate vicinity of said molten material, the body comprising at least one circulation channel (50) for a heat transfer fluid, said circulation channel (50) being straight,
and said body (2) further comprising at least one blind hole (60), separate from said circulation channel, said blind hole being suitable for receiving temperature measurement means,
and said at least one cooling finger having two blind holes, a temperature measurement means being received in each of said two blind holes,
said method being **characterized in that** :
- molten material is introduced into the mold,
- at least one so-called cooling-evacuation sequence is carried out, during which a heat transfer fluid is first admitted into the main channel of the cooling finger, in order to cool the material injected into the mold, then the residual fraction of said heat transfer fluid is evacuated by means of an evacuation fluid,
- at least one measurement of the value of a parameter representative of the temperature is carried out, by means of said measuring means,
- for the at least one cooling finger equipped with two temperature measurement means, the values representative of the temperature provided at the same instant by each of said two temperature measurement means are compared;
- in the event that the absolute value of the difference between these two values exceeds a predefined threshold, an alert is given, and/or the activation of the cooling-evacuation sequences is interrupted, and/or the molding cycle of a part is interrupted, and/or the next molding cycle is not triggered.

2. A method according to claim 1, wherein several spot measurements of the value of said parameter representing the temperature are carried out, in particular at a predetermined frequency.

3. A method according to any of claims 1 and 2, wherein a recording is made of the value of said parameter representing the temperature, in particular for tracing purposes.

4. A method according to any of claims 1 to 3, wherein the measured value of said parameter is compared with a predetermined maximum or minimum value and, in the event that this measured value is greater than said maximum value or less than said minimum value, at least one of the control parameters of the injection of the heat transfer fluid is modified, and preferably at least one of the control parameters selected from the group formed by the flow rate, pressure and duration of injection of heat transfer fluid, and/or at least one additional cooling-evacuation sequence is carried out.

5. A method according to any of claims 1 to 4, wherein said circulation channel (50) has at the level of its main section (51) a diameter (D51) between 1.5 mm and 6 mm.

6. A method according to any of claims 1 to 5, wherein the cross-section of said blind holes (60) is between approximately 0.3 mm and approximately 3 mm.

7. A method according to any of claims 1 to 5, wherein the smallest distance separating, in service, the blind holes (60) and the peripheral wall of the body is between 2.0 mm and 7.0 mm.

8. A method according to any of claims 1 to 7, wherein said blind holes are straight or comprise at least one curved portion, in particular a curved portion separating two straight sections.

9. A method according to any of claims 1 to 8, wherein said blind holes open onto the end of the body, opposite the mold.

10. A method according to any of claims 1 to 9, wherein said blind holes are arranged symmetrically with respect to the main axis of the body, viewed from the end.

11. A method according to any of claims 1 to 10, wherein the smallest distance separating, in service, the blind holes (60) and the peripheral wall of the body is the same for each of the blind holes.

12. A method according to any of claims 1 to 11, wherein said molten material is a metal.
